# FASCICULE DE BREVET EUROPEEN

(11) **EP 1 332 962 B1**
(45) Date de publication et mention de la délivrance du brevet: **04.08.2004**
(21) Numéro de dépôt: 03290221.5
(22) Date de dépôt: 29.01.2003
(51) Int. Cl.: B64C 1/14, B64C 1/32

(54) **Porte ejectable, pour aeronef**
Abwerfbare Flugzeugtür
Jettisonable aircraft door

(30) Priorité: 31.01.2002 FR 0201147
(43) Date de publication de la demande: 06.08.2003
(73) Titulaire: Airbus France, 31060 Toulouse Cedex 16 (FR)
(72) Inventeur: Leclerc, Frédéric, 31320 Pechbusque (FR)
(74) Mandataire: Poulin, Gérard

(56) Documents cités:
- EP-A- 0 876 954
- GB-A- 2 181 780
- US-A- 2 910 255
- US-A- 3 851 845

## Description

### Domaine technique

L'invention concerne une porte éjectable, conçue pour faciliter l'évacuation d'urgence d'un aéronef, en cas de nécessité.

Plus précisément, l'invention concerne une porte articulée d'aéronef, de type "bouchon", qui vient en butée sur des éléments mécaniques solidaires du cadre de la porte, lorsqu'elle est en position fermée. En vol, la pression qui règne à l'intérieur de la cabine maintient la porte fermée, en la plaquant sur certains de ces éléments mécaniques. Les autres éléments mécaniques supportent le poids de la porte.

L'invention s'applique notamment aux aéronefs militaires de type avions cargos, destinés au transport de troupes ou de matériel.

### Etat de la technique antérieure

Les aéronefs à vocation commerciale tels que les aéronefs destinés au transport de passagers sont généralement équipés de portes de type "bouchon". En cas d'évacuation d'urgence de l'aéronef, les portes sont utilisées par les passagers comme issues de secours, lorsque l'avion est au sol.

Le document GB-A-2 181 780 décrit une porte d'aéronef de type "bouchon", dans laquelle des butées situées sur la porte viennent en appui contre des éléments mécaniques fixés sur le cadre de la porte, lorsque celle-ci est fermée. La porte est articulée sur le cadre par une charnière montée sur son bord inférieur, de façon à s'ouvrir en basculant vers le bas, et inversement. Des moyens sont prévus pour engager les butées sur les éléments mécaniques du cadre lors de la fermeture, et inversement. Lors de l'ouverture de la porte, ces moyens déplacent la porte vers le haut avant de la faire basculer vers le bas.

Au contraire d'un aéronef à vocation commerciale, un aéronef militaire de type cargo, destiné au transport de troupes ou de matériel, doit pouvoir être évacué en vol si les circonstances le nécessitent. Dans ce cas, les portes utilisées pour l'embarquement doivent donc pouvoir s'escamoter rapidement afin de laisser le libre passage pour l'évacuation de l'équipage. On comprend qu'une porte telle que celle qui est décrite dans le document GB-A-2 181 780 ne permet pas de résoudre ce problème.

On connaît des moyens pyrotechniques qui pourraient permettre d'éjecter la porte pour autoriser l'évacuation en vol de l'équipage, en cas de nécessité. Néanmoins, ces moyens posent différents problèmes tels que celui de la maintenance, celui des risques associés à la présence d'explosifs et celui de la fiabilité. En effet, il existe toujours un risque de panne ou, au contraire, de déclenchement intempestif de tels moyens pyrotechniques. Un autre problème découle du caractère irréversible de leur déclenchement.

### Exposé de l'invention

L'invention a pour but de remédier au moins en partie aux inconvénients des portes de type "bouchon" équipant les aéronefs, et notamment les aéronefs militaires.

Plus précisément, l'invention a pour but de permettre l'évacuation rapide, en vol ou au sol, d'un aéronef équipé de portes de type "bouchon", sans risque et en réduisant de façon sensible les problèmes de maintenance et de fiabilité.

Conformément à l'invention, ce résultat est obtenu au moyen d'une porte d'aéronef, comprenant un cadre apte à être fixé au fuselage de l'aéronef, un panneau articulé sur le cadre par des moyens d'articulation, des butées et des éléments mécaniques respectivement montés sur le panneau et sur le cadre, de façon à être en appui mutuel sous l'effet du poids du panneau, lorsque la porte est fermée, et des moyens de guidage interposés entre le panneau et le cadre, de façon à dégager/engager automatiquement les butées vis-à-vis des éléments mécaniques, respectivement au début de l'ouverture et à la fin de la fermeture de la porte, caractérisée en ce qu'elle comprend de plus des moyens de déclenchement d'éjection, aptes à commander une déconnexion mécanique des moyens d'articulation et un désengagement relatif des butées vis-à-vis des éléments mécaniques, les moyens de guidage autorisant un déplacement du panneau vers le bas, par gravité, lors de la mise en oeuvre des moyens de déclenchement d'éjection.

Grâce à cet agencement, le panneau de la porte est automatiquement libéré et chute par gravité dès que les moyens de déclenchement d'éjection sont actionnés. Une évacuation d'urgence de l'aéronef est ainsi rendue possible sans que l'on ait recours à des moyens pyrotechniques dont les inconvénients ont été indiqués plus haut.

Selon un mode de réalisation préféré de l'invention, les moyens de déclenchement d'éjection sont des moyens mécaniques. Il est à noter qu'en variante, ces moyens de déclenchement d'éjection peuvent aussi être des moyens électriques, pneumatiques ou hydrauliques, sans sortir du cadre de l'invention.

Avantageusement, les moyens d'articulation comprennent des charnières principales munies d'axes de pivotement aptes à être escamotés par une mise en oeuvre desdits moyens de déclenchement d'éjection, pour commander la déconnexion des moyens d'articulation.

Dans ce cas, les moyens de déclenchement d'éjection comprennent de préférence une pièce montée sur le cadre de façon à pouvoir tourner autour d'un axe de rotation donné et des tiges reliant ladite pièce aux axes de pivotement.

Avantageusement encore, les moyens de déclenchement d'éjection sont aptes à escamoter les éléments mécaniques précités à l'intérieur du cadre pour les dégager des butées, lorsque les moyens de déclenchement d'éjection sont mis en oeuvre.

Avantageusement toujours, les moyens de guidage comprennent des galets montés sur le panneau et des rampes de guidage solidaires du cadre, lesdites rampes étant ouvertes vers le bas afin de permettre le déplacement du panneau vers le bas, par gravité, lors de la mise en oeuvre des moyens de déclenchement d'éjection.

Selon une variante de réalisation de l'invention, les moyens de déclenchement d'éjection commandent, de plus, au moins un éjecteur mécanique actif apte à pousser le panneau vers le bas lors de la mise en oeuvre des moyens de déclenchement d'éjection.

Dans ce cas, l'éjecteur mécanique actif est monté, de préférence, sur un bord supérieur du cadre.

Selon une autre variante de réalisation de l'invention, les moyens d'articulation sont interposés entre des bords inférieurs du panneau et du cadre et au moins un éjecteur mécanique passif, à ressort, apte à pousser le panneau vers le bas lors de la déconnexion des moyens d'articulation, est intégré dans ces derniers.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue de face qui représente de façon très schématique une porte d'aéronef conforme à l'invention, observée de l'intérieur de l'aéronef ;
- la figure 2 est une vue de côté, en coupe partielle et à plus grande échelle, qui représente schématiquement la partie basse de la porte de la figure 1 ;
- la figure 3 est une vue en coupe à plus grande échelle selon la ligne III-III de la figure 2 ;
- la figure 4 est une vue en coupe comparable à la figure 2, illustrant l'éjection du panneau de la porte ; et
- la figure 5 est une vue en coupe à plus grande échelle représentant un détail de la porte de la figure 1.

### Description détaillée d'un mode de réalisation préféré de l'invention

Un mode de réalisation préféré de porte d'aéronef conforme à l'invention est représenté sur les figures.

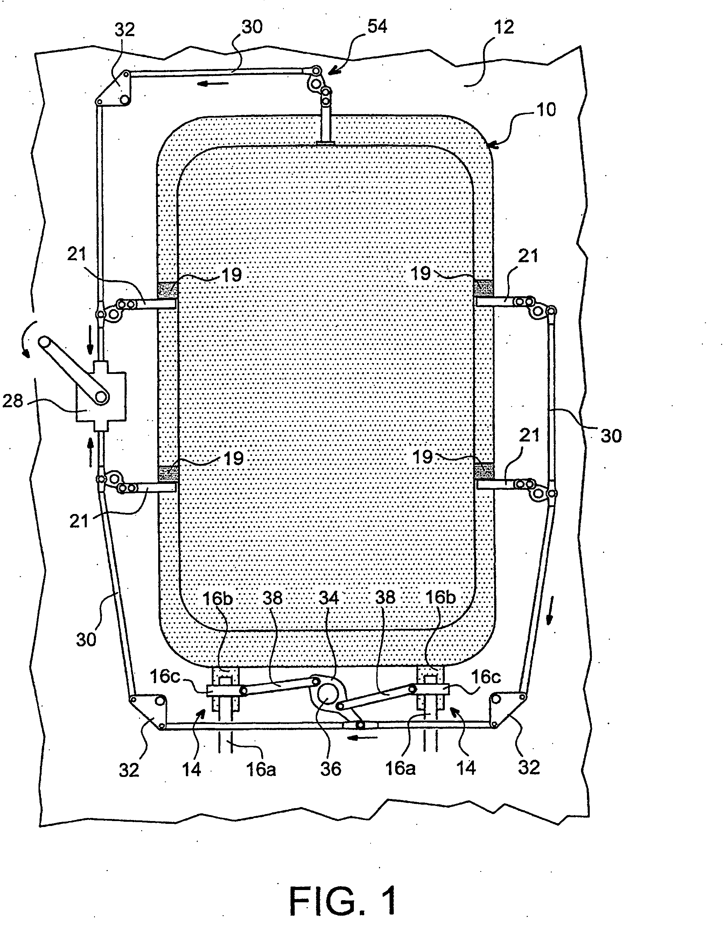

Comme l'illustre notamment la figure 1, la porte comprend un panneau rigide 10 ainsi qu'un cadre 12 solidaire du fuselage de l'aéronef. Comme on l'expliquera plus en détail par la suite, la porte est de type bouchon.

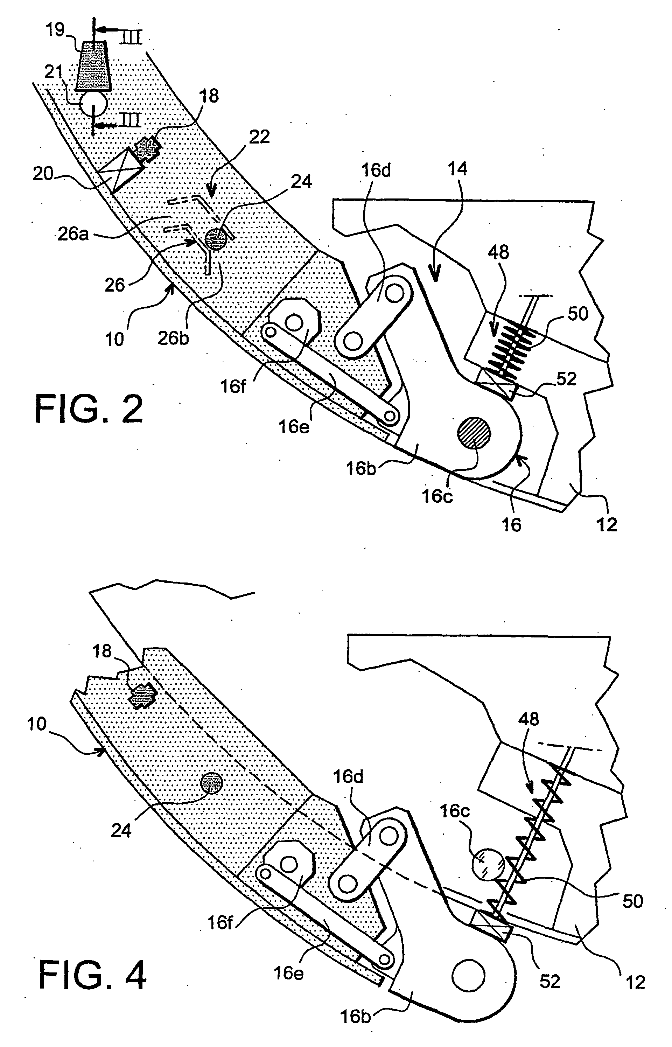

Dans le mode de réalisation représenté, le panneau 10 de la porte est articulé sur le cadre 12 par des moyens d'articulation 14 interposés entre les bords inférieurs horizontaux du panneau et du cadre. Ces moyens d'articulation 14 comprennent deux charnières 16 dont la structure est représentée plus en détail sur la figure 2.

Chacune des charnières 16 comprend un élément fixe 16a solidaire du cadre 12 et un élément mobile 16b, articulé sur l'élément fixe 16a par un axe de pivotement 16c. Les deux axes de pivotement 16c sont orientés selon un axe géométrique horizontal commun. Chacun des éléments mobiles 16b forme un levier dont les extrémités sont reliées à la partie inférieure du panneau 10 de la porte par deux biellette articulée 16d et 16e. La liaison entre la biellette 16e et le panneau 10 de la porte s'effectue au travers d'une pièce tournante 16f.

Les charnières 14 autorisent le pivotement du panneau 10 de la porte vers le bas et vers le haut lorsque des moyens de commande d'ouverture/fermeture (non représentés) sont actionnés pour ouvrir ou fermer la porte. Ces moyens de commande d'ouverture/fermeture, qui comprennent par exemple des vérins, ne font pas partie de l'invention. De plus, ils sont bien connus de l'homme du métier. Ils ne seront donc pas décrits ici.

La coopération du levier formé par chacun des éléments mobiles 16b de la charnière principale 16 avec la partie inférieure du panneau 10 de la porte, au travers des biellettes 16d et 16e permet de superposer au mouvement de pivotement du panneau 10 de la porte un mouvement de translation vers le haut lors de l'ouverture de la porte et vers le bas lors de sa fermeture.

Comme l'illustrent les figures 1 et 2, des premières butées 18 sont montées sur les deux parties verticales du chant du panneau 10. Lorsque la porte est fermée, ces butées 18 sont en appui contre des premiers éléments mécaniques 20 montés sur le cadre 12. Plus précisément, les butées 18 sont décalées vers l'intérieur de l'aéronef par rapport aux éléments mécaniques 20, de telle sorte que la différence de pression entre l'intérieur et l'extérieur de l'aéronef tend à plaquer les butées 18 contre les éléments mécaniques 20.

Par ailleurs, des deuxièmes butées 19 sont également montées sur les deux parties verticales du chant du panneau 10. Lorsque la porte est fermée, ces butées 19 sont en appui contre des deuxièmes éléments mécaniques 21 montés sur le cadre 12, sous l'effet du poids du panneau 10. Plus précisément, les butées 19 sont décalées vers le haut par rapport aux éléments mécaniques 21. Ces deuxièmes éléments mécaniques 21 reprennent le poids du panneau 10 et le maintiennent donc en place.

Les caractéristiques qui viennent d'être exposées sont conformes à celles de toute porte de type bouchon.

En outre, des moyens de guidage 22 sont interposés entre le panneau 10 et le cadre 12 de la porte, le long des bords verticaux du chant dudit panneau, comme on l'a représenté partiellement sur la figure 2. Ces moyens de guidage 22 comprennent des galets 24, montés sur le chant du panneau 10 et des rampes de guidage 26 formées sur le cadre 12. Les axes des galets sont orientés selon une direction horizontale sensiblement parallèle à l'axe longitudinal de l'aéronef. Les rampes de guidage 26 ont leur extrémité supérieure 26a ouverte selon une direction horizontale vers l'extérieur de l'aéronef, de telle sorte que les galets 24 pénètrent dans lesdites rampes 26 par leur extrémité supérieure et guident alors le panneau pour qu'il rentre légèrement à l'intérieur du fuselage à la fin de la fermeture de la porte.

Conformément à l'invention, la porte est également équipée de moyens non pyrotechniques permettant d'assurer l'éjection rapide du panneau 10 en cas de nécessité. Dans le mode de réalisation préféré de l'invention qui va à présent être décrit, ces moyens d'éjection sont entièrement mécaniques. En variante, ils peuvent comporter des moyens de déclenchement d'éjection de nature différente, notamment électriques, hydrauliques ou pneumatiques.

Dans le mode de réalisation représenté sur les figures, les moyens de déclenchement d'éjection comprennent un organe de manoeuvre tel qu'une poignée 28 (figure 1), montée sur le cadre 12, à l'intérieur de l'aéronef.

La poignée 28 est reliée aux axes 16c des charnières 16 et aux éléments mécaniques 21 par un mécanisme approprié. Ce mécanisme est conçu de façon telle qu'un actionnement de la poignée 28 dans le sens de l'éjection a pour effet, d'une part, de déplacer les axes de pivotement 16c selon leur axe géométrique commun de façon telle que les éléments fixes 16a et mobiles 16b soient mécaniquement déconnectés et, d'autre part, d'escamoter les deuxièmes éléments mécaniques 21 à l'intérieur du cadre 12, de façon à désengager lesdits deuxièmes éléments des butées 19.

Pour permettre le déplacement du panneau 10 vers le bas, par gravité, nécessaire à l'éjection dudit panneau, les rampes de guidage 26 ont également leur extrémité inférieure 26b ouverte vers le bas.

Comme l'illustre la figure 1, le mécanisme reliant la poignée 28 aux axes 16c et aux deuxièmes éléments mécaniques 21 comprend une tringlerie qui chemine le long du cadre 12 et dont les différents segments 30 sont reliés les uns aux autres, dans les angles dudit cadre, par des organes pivotants 32. Une manoeuvre de la poignée 28 a ainsi pour effet de déplacer les segments 30 en translation dans l'un ou l'autre sens.

Comme l'illustre également la figure 1, le segment 30 qui chemine le long du bord inférieur du cadre 12 est en prise sur une pièce 34 montée sur ledit cadre de façon à pouvoir tourner autour d'un axe de rotation 36 orienté horizontalement selon une direction transversale par rapport à l'aéronef. Deux bielles 38 relient la pièce 34 à chacun des axes de pivotement 16c des charnières 16. Ainsi, une translation du segment inférieur 30 vers la gauche en considérant la figure 1, commandée par un actionnement de la poignée 28, a pour effet un pivotement de la pièce 34 dans le sens des aiguilles d'une montre et, par conséquent, un déplacement des axes 16c vers ladite pièce 34. L'amplitude de ce déplacement est tel que les éléments fixes 16a et mobiles 16b des charnières 16 sont mécaniquement déconnectés lorsque la poignée 28 est amenée dans sa position "éjection".

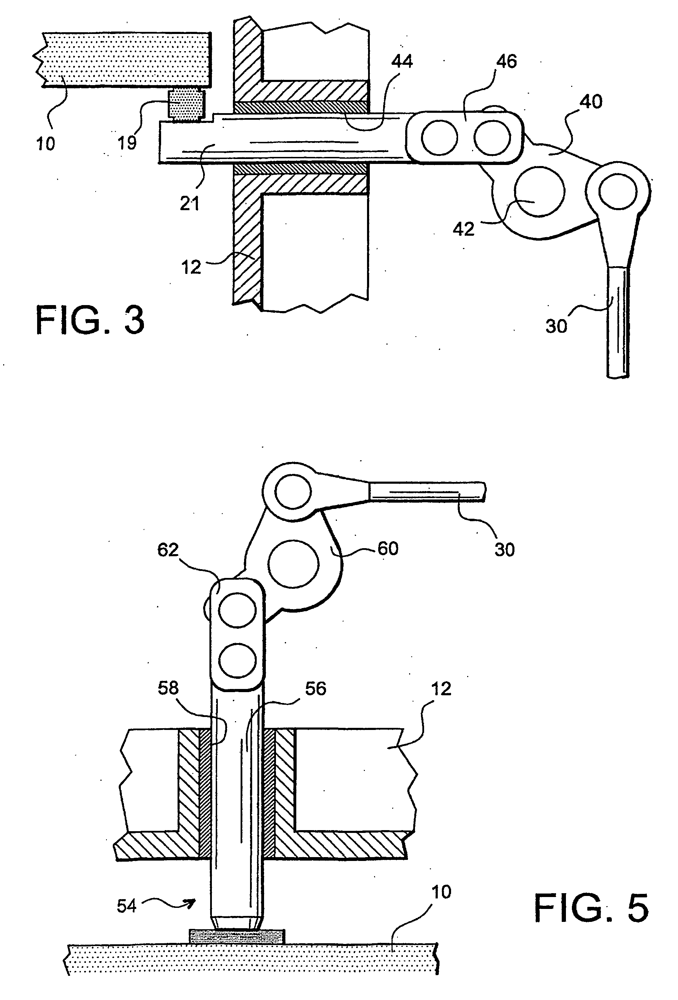

Comme on l'a représenté sur la figure 3, les segments 30 situés sur les parties verticales du cadre 12 sont articulés sur des manivelles 40 qui sont montées pivotantes sur ledit cadre par des axes 42 orientés parallèlement à l'axe 36. Les manivelles 40 sont montées sur le cadre 12 en face de chacun des deuxièmes éléments mécaniques 21 et ces derniers sont montés coulissants dans des alésages 44 pratiqués dans le cadre 12, selon des directions horizontales parallèles à l'axe longitudinal de l'aéronef. Chacune des manivelles 40 est reliée à l'un des deuxièmes éléments mécaniques 21 par une biellette articulée 46.

Grâce à l'agencement qui vient d'être décrit, une translation des segments 30 situés sur les parties verticales du cadre 12, provoquée par l'actionnement de la poignée 28, a pour effet de déplacer les deuxièmes éléments mécaniques 21 vers l'intérieur des alésages 44. Plus précisément, les éléments mécaniques 21 sont effacés à l'intérieur du cadre 12 lorsque la poignée 28 est amenée en position "éjection". Les deuxièmes butées 19 sont alors désengagées des deuxièmes éléments mécaniques 21 et le panneau 10 de la porte est libéré.

Comme l'illustre notamment la figure 4, la déconnexion des moyens d'articulation de la porte et le désengagement relatif des deuxièmes butées 19 et des deuxièmes éléments mécaniques 21 ont pour effet de supprimer toute liaison entre le panneau 10 et le cadre 12 de la porte. Le panneau 10 chute donc alors par gravité, ce qui est rendu possible du fait que les rampes de guidage 26 sont ouvertes vers le bas.

Il peut arriver qu'une trop forte adhérence du joint d'étanchéité placé sur le pourtour de la porte ou la présence de givre ou de glace gêne l'éjection du panneau. Pour remédier à cet inconvénient, un ou plusieurs éjecteurs mécaniques peuvent éventuellement être prévus.

Ainsi, comme on l'a représenté schématiquement sur les figures 2 et 4, un éjecteur passif à ressort 48 peut être monté sur le cadre 12 à proximité de chacune des charnières 16. Cet éjecteur comporte un ressort 50 qui presse une pièce 52 contre une face supérieure de l'élément mobile 16b de la charnière 16 correspondante. Dès que l'axe 16c est enlevé de la charnière 16 par la manoeuvre du levier 28, l'éjecteur à ressort 48 pousse vers le bas le panneau 10 de la porte, favorisant ainsi son éjection.

Par ailleurs, comme on l'a représenté sur la figure 5, un ou plusieurs éjecteurs actifs 54 peuvent également être prévus, notamment sur la partie supérieure de la porte. Chaque éjecteur 54 comprend un poussoir 56, monté coulissant dans un alésage vertical 58 pratiqué dans la partie supérieure du cadre 12. Le poussoir 56 est relié au segment 30 monté sur la partie supérieure du cadre 12 par une manivelle 60 et une biellette 62.

## Revendications

1. Porte d'aéronef, comprenant un cadre (12) apte à être fixé au fuselage de l'aéronef, un panneau (10) articulé sur le cadre par des moyens d'articulation (14), des butées (19) et des éléments mécaniques (21) respectivement montés sur le panneau (10) et sur le cadre (12), de façon à être en appui mutuel sous l'effet du poids du panneau, lorsque la porte est fermée, et des moyens de guidage (22) interposés entre le panneau (10) et le cadre (12), de façon à dégager/engager automatiquement les butées (19) vis-à-vis des éléments mécaniques (21), respectivement au début de l'ouverture et à la fin de la fermeture de la porte, **caractérisée en ce qu'**elle comprend de plus des moyens de déclenchement d'éjection (28, 30, 32, 34, 36, 38), aptes à commander une déconnexion mécanique des moyens d'articulation (14) et un désengagement relatif des butées (19) vis-à-vis des éléments mécaniques (21), les moyens de guidage (22) autorisant un déplacement du panneau (10) vers le bas, par gravité, lors de la mise en oeuvre des moyens de déclenchement d'éjection (28, 30, 32, 34, 36, 38).

2. Porte d'aéronef selon la revendication 1, dans laquelle les moyens de déclenchement d'éjection (28, 30, 32, 34, 36, 38) sont des moyens mécaniques.

3. Porte d'aéronef selon l'une quelconque des revendications 1 et 2, dans laquelle les moyens d'articulation (14) comprennent des charnières (16) munies d'axes de pivotement (16c) aptes à être escamotés par une mise en oeuvre desdits moyens de déclenchement d'éjection (28, 30, 32, 34, 36, 38), pour commander la déconnexion des moyens d'articulation (14).

4. Porte d'aéronef selon la revendication 3, dans laquelle les moyens de déclenchement d'éjection (28, 30, 32, 34, 36, 38) comprennent une pièce (34) montée sur le cadre (12) de façon à pouvoir tourner autour d'un axe de rotation (36) donné et des tiges (38) reliant ladite pièce (34) aux axes de pivotement (16c).

5. Porte d'aéronef selon l'une quelconque des revendications précédentes, dans laquelle les moyens de déclenchement d'éjection (28, 30, 32, 34, 36, 38) sont aptes à escamoter lesdits éléments mécaniques (21) à l'intérieur du cadre (12) pour les dégager des butées (19), lorsque lesdits moyens de déclenchement d'éjection sont mis en oeuvre.

6. Porte d'aéronef selon l'une quelconque des revendications précédentes, dans laquelle les moyens de guidage (22) comprennent des galets (24) montés sur le panneau (10) et des rampes de guidage (26) solidaires du cadre (12), lesdites rampes (26) étant ouvertes vers le bas afin de permettre ledit déplacement du panneau (10) vers le bas, par gravité, lors de la mise en oeuvre des moyens de déclenchement d'éjection (28, 30, 32, 34, 36, 38).

7. Porte d'aéronef selon l'une quelconque des revendications précédentes, dans laquelle les moyens de déclenchement d'éjection (28, 30, 32, 34, 36, 38) commandent, de plus, au moins un éjecteur mécanique actif (56) apte à pousser le panneau (10) vers le bas lors de la mise en oeuvre des moyens de déclenchement d'éjection.

8. Porte d'aéronef selon la revendication 7, dans laquelle ledit éjecteur mécanique actif (56) est monté sur un bord supérieur du cadre (12).

9. Porte d'aéronef selon l'une quelconque des revendications précédentes, dans laquelle les moyens d'articulation (14) sont interposés entre des bords inférieurs du panneau (10) et du cadre (12) et au moins un éjecteur mécanique passif (48), à ressort, apte à pousser le panneau (10) vers le bas lors de la déconnexion des moyens d'articulation (14), est intégré dans ces derniers.

## Patentansprüche

1. Luftfahrzeugtür mit einem Rahmen (12), der am Rumpf des Luftfahrzeugs befestigt werden kann, einer am Rahmen über Gelenkmittel (14) angelenkten Platte (10), Anschlägen (19) und mechanischen Elementen (21), die jeweils an der Platte (10) und am Rahmen (12) derart angebracht sind, dass sie sich unter der Einwirkung des Gewichts der Platte gegenseitig abstützen, wenn die Tür geschlossen ist, sowie Führungsmitteln (22), die zwischen die Platte (10) und den Rahmen (12) so eingefügt sind, dass sie automatisch die Anschläge (19) in Bezug auf die mechanischen Elemente (21) jeweils am Anfang des Öffnens und am Ende des Schließens der Tür außer Eingriff und in Eingriff bringen, **dadurch gekennzeichnet, dass** sie außerdem Mittel zum Auslösen des Ausstoßes bzw. Abwurfs (28,30,32,34,36,38) umfasst, die eine mechanische Verbindungstrennung der Gelenkmittel (14) und ein relatives außer-Eingriff-Bringen der Anschläge (19) in Bezug auf die mechanischen Elemente (21) steuern können, wobei die Führungsmittel (22) bei Betätigung der Ausstoß-Auslösemittel (28,30,32,34,36,38) eine Bewegung der Platte (10) durch Schwerkraft nach unten gestatten.

2. Luftfahrzeugtür nach Anspruch 1, wobei die Ausstoß-Auslösemittel (28,30,32,34,36,38) mechanische Mittel sind.

3. Luftfahrzeugtür nach einem der Ansprüche 1 oder 2, wobei die Gelenkmittel (14) Scharniere (16) umfassen, die mit Dreh-/Schwenkachsen (16c) versehen sind, welche durch eine Betätigung der Ausstoß-Auslösemittel (28,30,32,34,36,38) eingezogen werden können, um die Verbindungstrennung der Gelenkmittel (14) zu steuern.

4. Luftfahrzeugtür nach Anspruch 3, wobei die Ausstoß-Auslösemittel (28,30,32,34,36,38) ein Teil (34), das am Rahmen (12) derart angebracht ist, dass es sich um eine gegebene Drehachse (36) drehen kann, sowie Stangen (38), die das Teil (34) mit den Dreh-/Schwenkachsen (16c) verbinden, umfassen.

5. Luftfahrzeugtür nach einem der vorangehenden Ansprüche, wobei die Ausstoß-Auslösemittel (28,30,32,34,36,38) die mechanischen Elemente (21) ins Innere des Rahmens (12) einziehen können, um sie außer Eingriff mit den Anschlägen (19) zu bringen, wenn die Ausstoß-Auslösemittel (28,30,32,34,36,38) betätigt werden.

6. Luftfahrzeugtür nach einem der vorangehenden Ansprüche, wobei die Führungsmittel (22) an der Tür (10) angebrachte Gleitrollen (24) sowie mit dem Rahmen (12) einstückige Führungsrampen (26) umfassen, wobei die Rampen (26) nach unten geöffnet sind, um bei der Betätigung der Ausstoß-Auslösemittel (28,30,32,34,36,38) die Bewegung der Platte (10) nach unten durch Schwerkraft zu gestatten.

7. Luftfahrzeugtür nach einem der vorangehenden Ansprüche, wobei die Ausstoß-Auslösemittel (28,30,32,34,36,38) außerdem mindestens ein aktives mechanisches Ausstoßelement (56) steuern, das die Platte (10) beim Betätigen der Ausstoß-Auslösemittel nach unten stoßen kann.

8. Luftfahrzeugtür nach Anspruch 7, wobei das aktive mechanische Ausstoßelement (56) an einem oberen Rand des Rahmens (12) angebracht ist.

9. Luftfahrzeugtür nach einem der vorangehenden Ansprüche, wobei die Gelenkmittel (14) zwischen unteren Rändern der Platte (10) und des Rahmens (12) eingefügt sind und mindestens ein passives mechanisches Ausstoßelement (48) mit Feder, das die Platte (10) bei der Verbindungstrennung der Gelenkmittel (14) nach unten stoßen kann, in letztere integriert ist.

## Claims

1. Aircraft door comprising a frame (12) that can be fixed to the fuselage of the aircraft, a panel (10) articulated onto the frame by articulation means (14), stops (19) and mechanical elements (21) installed on the panel (10) and on the frame (12) respectively, so as to remain in mutual contact under the effect of the weight of the panel when the door is closed, and guide means (22) inserted between the panel (10) and the frame (12) in order to automatically release / engage the stops(19) with respect to the mechanical elements (21), at the beginning of opening and at the end of closing of the door respectively, **characterized in that** it also comprises ejection triggering means (28, 30, 32, 34, 36, 38), that can control mechanical disconnection of the articulation means (14) and a relative disengagement of the stops (19) from the mechanical elements (21), the guide means (10) enabling downwards displacement of the panel (10) by gravity when the ejection triggering means (28, 30, 32, 34, 36, 38) are used.

2. Aircraft door according to claim 1, in which the ejection triggering means (28, 30, 32, 34, 36, 38) are mechanical means.

3. Aircraft door according to either of claims 1 and 2, in which the articulation means (14) comprise hinges (16) provided with hinge pins (16c) that are retracted by use of the said ejection triggering means (28, 30, 32, 34, 36, 38) to control disconnection of the articulation means (14).

4. Aircraft door according to claim 3, in which the ejection triggering means (28, 30, 32, 34, 36, 38) comprise a part (34) installed on the frame (12) so as to be able to rotate around a given rotation axis (36) and rods (38) connecting the said part (34) to the hinge pins (16c).

5. Aircraft door according to any one of the previous claims, in which the ejection triggering means (28, 30, 32, 34, 36, 38) are capable of retracting the said mechanical means (21) inside the frame (12) to release them from the stops (19) when the said ejection triggering means are used.

6. Aircraft door according to any one of the previous claims, in which the guide means (22) comprise rollers (24) installed on the panel (10) and guide ramps (26) fixed to the frame (12), the said ramps (26) being open downwards in order to enable the said displacement of the panel (10) downwards by gravity, during use of the ejection triggering means (28, 30, 32, 34, 36, 38).

7. Aircraft door according to any one of the previous claims, in which the ejection triggering means (28, 30, 32, 34, 36, 38) also control at least one active mechanical ejector (56) capable of pushing the panel (10) downwards during use of the ejection triggering means.

8. Aircraft door according to claim 7, in which the said active mechanical ejector (56) is installed on an upper edge of the frame (12).

9. Aircraft door according to any one of the previous claims, in which the articulation means (14) are inserted between the lower edges of the panel (10) and the frame (12) and at least one passive spring-loaded mechanical ejector (48) is integrated into the articulation means, capable of pushing the panel (10) downwards during disconnection of the articulation means (14).
